# EUROPEAN PATENT SPECIFICATION

(11) **EP 4 065 380 B1**
(45) Date of publication and mention of the grant of the patent: **16.04.2025**
(21) Application number: 20897213.3
(22) Date of filing: 02.12.2020
(51) Int. Cl.: B42D 25/36, G01N 21/31, G07D 7/1205, G07D 7/202, B42D 25/29, G01N 21/25

(54) **CODED POLYMER SUBSTRATES FOR BANKNOTE AUTHENTICATION**
CODIERTE POLYMERSUBSTRATE ZUR BANKNOTENAUTHENTIFIZIERUNG
SUBSTRATS POLYMÈRES CODÉS POUR L'AUTHENTIFICATION DE BILLETS DE BANQUE

(30) Priority: 03.12.2019 US 201916702088
(43) Date of publication of application: 05.10.2022
(73) Proprietor: Spectra Systems Corporation, Providence, RI 02903 (US)
(72) Inventor: LAWANDY, Nabil, Saunderstown, RI 02874 (US)
(74) Representative: WBH Wachenhausen Patentanwälte PartG mbB
(86) International application number: PCT/US2020/062872
(87) International publication number: WO 2021/113349

(56) References cited:
- WO-A1-2018/215774
- US-A1- 2009 116 753
- US-A1- 2010 140 501
- US-A1- 2011 147 614
- US-A1- 2013 106 092
- US-A1- 2017 028 763
- US-A1- 2018 252 637
- US-A1- 2018 357 455
- US-A1- 2020 105 083

## Description

### CROSS-REFERENCE TO RELATED APPLICATIONS

The application is a PCT international application, which claims priority to U.S. patent application Ser. No. 16/702,088, filed December 3, 2019.

### TECHICAL FIELD

The present invention relates generally to apparatus and methods for coding items with polymer substrates including doping materials, the codes being detectable in the form of patterned radiation spectra in response to incident radiation.

### BACKGROUND OF THE INVENTION

Counterfeiting is a growing concern and, as a result, secure instruments such as banknotes typically have three levels of authentication. Level I authentication is for public uses and is typically in the form of an optical effect, such as optically variable ink or security threads with optical characteristics that are relatively unique and difficult to duplicate. These Level I authentication features include holographic threads and lenticular lens array security threads. Paper banknotes have included Level I authentication features in the form of watermarks.

Similar to Level I authentication features, Level II authentication features are typically known to the public and commercial banks, and include features such as magnetics and fluorescent and phosphorescent inks, which can be read by simple sensors commonly used in ATMs and bill acceptors.

Level III security features are machine readable features and are more sophisticated than Level II authentication features. Level III security features are typically not known to the public and commercial banks and are used to protect against threats from state-sponsored counterfeiters and other well-funded organizations. The covert Level III authentication features are typically either in the form of inks or other features embedded in the substrate of the banknotes.

Over the last two decades, polymer banknotes have gradually been gaining market share m the banknote industry, with over thirty countries using polymer substrates including materials such as Biaxially Oriented Poly-Propylene (BOPP). The use of polymer substrates has been primarily restricted to lower denominations, as most of the Level III security features that have been employed within paper banknote substrates are not available or suitable for use with polymer banknotes.

In the prior art according to US 2018/357455 A1 a printed security mark is disclosed which comprises a random arrangement of printed LEDS and a wavelength conversion layer.

In the prior art according to US 2010/140501 A1, systems and methods for document and product authentication using a variety of absorption and emission signatures are disclosed, wherein emission signatures in the form of florescent or phosphorescent coatings, inks and substrates are used for authentication and protection of items.

In the prior art according to US 2011/147614 A1 phosphor compositions are disclosed that can be incorporated into or onto plastic substrates as covert security features.

The present invention concerns a new Level III security feature in the form of a machine readable technology for use with polymer banknotes.

### SUMMARY OF THE INVENTION

In general, in one aspect, the invention features a method according to claim 1 for authenticating an item, including providing the item including a polymer substrate comprising a polymer material and a doping material, the polymer material and the doping material configured to transmit radiation laterally through the polymer substrate, and the doping material capable of scattering radiation and absorbing radiation of at least one specific wavelength to generate a spectral signature in a spectral band of wavelengths of the transmitted radiation, irradiating the item with incident radiation characterized by a spectral band of wavelengths spanning a band of wavelengths including the at least one specific wavelength absorbed and scattered by the doping material, detecting the spectral signature after the radiation is transmitted laterally through the polymer substrate, and determining a code associated with the spectral signature, and comparing the determined code to a reference code.

Implementations of the invention may include one or more of the following features. The doping material may be not matched to the index of refraction of the polymer material, and the polymer substrate may be transparent and colorless. The doping material may be further capable of emitting radiation of a particular wavelength by excitation from the transmitted radiation.

The method may further include providing an indication of authenticity if the determined code matches the reference code. The spectral signature may be an absorption and scattering pattern in the spectral band of wavelengths of the incident radiation. The spectral band of wavelengths of the incident radiation may include visible light or non-visible electromagnetic radiation.

The polymer material may be biaxially oriented poly-propylene. The doping material may be capable of absorbing and scattering radiation at a plurality of specific wavelengths to produce the spectral signature. The absorbed and scattered radiation at the plurality of specific wavelengths may have different intensities at each of the plurality of specific wavelengths. The item may be currency.

The method may further include covering the polymer substrate with an opacity layer. The doping material may be added to the polymer material at 0.01-10% loadings by weight. The polymer material and the doping material may be configured to transmit radiation laterally through the polymer substrate through a wave guided propagation mechanism.

In general, in another aspect, the invention features a system according to claim 14 for authenticating an item, including the item including a polymer substrate comprising a polymer material and a doping material, the polymer material and the doping material configured to transmit radiation laterally through the polymer substrate, and the doping material capable of scattering radiation and absorbing radiation of at least one specific wavelength to generate a spectral signature in a spectral band of wavelengths of the transmitted radiation, a radiation source for irradiating the item with incident radiation characterized by a spectral band of wavelengths spanning a band of wavelengths including the at least one specific wavelength absorbed and scattered by the doping material, and a sensor configured to detect the spectral signature after the radiation is transmitted laterally through the polymer substrate.

Implementations of the invention may include one or more of the following features. The doping material may be not matched to the index of refraction of the polymer material, and the polymer substrate may be transparent and colorless. The doping material may be further capable of emitting radiation of a particular wavelength by excitation from the transmitted radiation.

The system includes a computing device for determining a code associated with the spectral signature, wherein the computing device is configured to compare the determined code to a reference code. The computing device may be configured to determine whether the item is authentic based on the comparison of the determined code to the reference code. The spectral signature may be an absorption and scattering pattern in the spectral band of wavelengths of the incident radiation. The doping material may capable of absorbing and scattering radiation at a plurality of specific wavelengths to generate the spectral signature, the absorbed and scattered radiation having different intensities at each of the plurality of specific wavelengths, and the sensor configured to detect the intensities at each of the plurality of specific wavelengths in the spectral signature.

The polymer material may be biaxially oriented poly-propylene. The item may be currency. The doping material may be added to the polymer material at 0.01-10% loadings by weight. The polymer material and the doping material may be configured to transmit radiation laterally through the polymer substrate through a wave guided propagation mechanism.

### BRIEF DESCRIPTION OF THE FIGURES

Figure 1 is a graph showing a first code corresponding to the resulting spectral intensities after a band of incident radiation in the near infrared portion of the electromagnetic spectrum is transmitted through a clear approximately 75 micron polymer layer including doping material;
Figure 2 is a graph showing a second code corresponding to the resulting spectral intensities after a band of incident radiation in the near infrared portion of the electromagnetic spectrum is transmitted through a clear approximately 75 micron polymer layer including doping material;
Figure 3 is a graph showing a third code corresponding to the resulting spectral intensities after a band of incident radiation in the near infrared portion of the electromagnetic spectrum is transmitted through a clear approximately 75 micron polymer layer with doping material;
Figure 4 is a graph showing a fourth code corresponding to the resulting spectral intensities after a band of incident radiation in the near infrared portion of the electromagnetic spectrum is transmitted through a clear approximately 75 micron polymer layer with doping material;
Figure 5 shows an exemplary authentication system in accordance with embodiments of the invention;
Figure 6 shows an exemplary system that may be employed to authenticate an item using the method of the present invention;
Figure 7 shows an exemplary screen shot of a software application that may be utilized on a smartphone for authenticating an item in accordance with the present invention;
Figure 8 shows a side view illustration of a substrate of one embodiment of the present invention, the substrate including doping material capable of transmitting incident radiation laterally through the substrate through a wave guided propagation mechanism; and
Figure 9 show a top view illustration of an item of one embodiment of the present invention, the item including a clear window that is partially covered by a foil.

### DETAILED DESCRIPTION OF THE PREFERRED EMBODIMENTS

The present invention provides for apparatus and methods for coding polymer substrates with the addition of doping materials, and authentication systems and methods using the coded polymer substrates. The coded polymer substrates may be used, e.g., for authenticating secure items, instruments or documents, such as banknotes or currency.

The substrate may include a transparent and colorless polymer material. The substrate may include a polymer material having an index of refraction between approximately 1.3 and approximately 1.8, compared to the index of refraction of the surrounding medium, i.e., air, of 1.0. A polymer substrate employed in the present invention may be a BOPP layer. Such a BOPP substrate, as used in banknotes or currency, may have a core layer which is approximately 60-90 microns in thickness and top plasma or corona treated skin layers for print adhesion. In one embodiment, the polymer substrate may be covered with an opacity layer to allow for both contrast printing and discharge of static charges. In another embodiment, the polymer substrate may include a clear area or window free from opacity, as is often the case in higher denomination polymer banknotes. The opacity layer of the banknote, either alone or in combination with the area free from opacity, may function as the analog of paper banknote watermark for polymer banknotes.

Doping materials may be nanometer and micrometer materials added to the BOPP material. The doping materials may be added to the BOPP material during extrusion of the polymer layer. The doping materials are selected not to be index matched to allow for scattering of radiation transmitted through the polymer substrate, but at otherwise sufficiently low concentrations to maintain the clarity and transparency of the BOPP material.

The doping materials may be inorganics, organics, semiconductor and nanostructures exhibiting exciton, phonon polariton and plasmonic modes, and particularly those that can survive the extrusion temperatures of the BOPP material or other selected polymer material. The doping materials may be added to or loaded in the BOPP material at 0.01-10% loadings by weight. The quantity of doping material embedded in the polymer material may be so dilute that it does not substantially alter the index of refraction of the polymer material or otherwise render the substrate non-transparent or non-colorless. For example, the particles of the doping material may have a density of less than 900 parts per million. Moreover, the haze of the substrate with the embedded doping material may be less than 5, in which haze refers to the percentage of incident light diffused or scattered when passing through a transparent material.

Most significantly, each doping material exhibits a unique absorptive and/or scattering property or signature in the spectrum of incident radiation transmitted through the BOPP material in the region from the far infrared to the long ultraviolet. In particular, the doping materials selectively absorb and/or scatter incident radiation at specific wavelengths. By combining specific absorption and/or scattering features of various doping materials, codes for authentication of the banknotes are created in the form of patterned spectra with notches or other non-uniform features, i.e., absorption or scattering patterns. In addition, the doping materials may include materials such as phosphors that emit radiation of a particular wavelength, upon excitation by radiation transmitted directly or laterally through the polymer substrate. The emission features of such doping materials may be combined with the absorption and/or scattering features of the doping materials to create patterned spectra for the authentication codes.

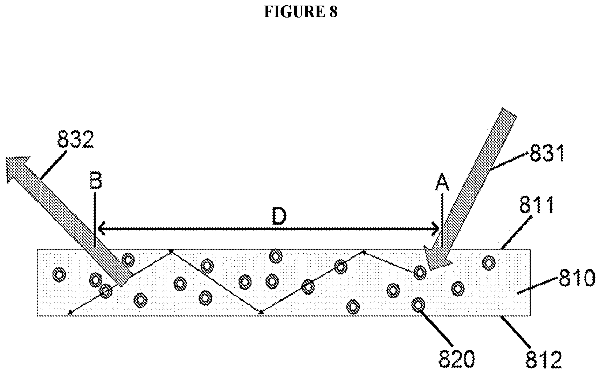

The substrate may have a thickness of approximately 60 microns to approximately 100 microns between an upper surface and a lower surface of the substrate, e.g., between upper surface 811 and lower surface 812 illustrated in Figure 8. In this case, incident radiation may be transmitted directly through the transparent substrate, i.e., from the lower surface to the upper surface.

The substrate with doping material embedded therein may be configured to function as a waveguide for radiation transmitted through the substrate, i.e., through total internal reflection between the upper and lower surfaces of the substrate. In particular, the substrate is configured as a planar dielectric waveguide capable of transmitting electromagnetic radiation laterally through the substrate in a waveguide mode between the upper and lower surfaces. As shown in Figure 8, this allows incident radiation 831 coupled to the substrate 810 at a point A to be detected as output light 832 at point B located laterally a distance D from point A. Output light 832 includes a spectral signature. Doping material 820 is disposed through substrate 810, doping material 820 being capable of scattering and/or absorbing radiation.

The incident radiation may enter the substrate for waveguide transmission through external coupling at the upper or lower surface of the substrate followed by internal scattering. Such scattering mediated waveguide coupling is an alternative mode for radiation to enter the planar waveguide of the substrate compared to directing the radiation through an edge of the substrate. The same mode of scattering can result in external coupling and may be used to decouple radiation transmitted through the substrate for detection.

The doping material include particles capable of scattering radiation coupled to the substrate for waveguide mode transmission. In particular, momentum of the incident radiation is conserved such that when radiation strikes the scattering particles, the radiation is launched into a waveguide mode. Utilizing the materials disclosed herein, the radiation may propagate through the substrate a distance ranging from millimeters to centimeters. The path length of radiation propagated through the substrate is determined by the absorptive properties of the doping material embedded in the polymer material. The transmission of radiation in a waveguide mode significantly increases the path length of the radiation through the substrate before the radiation is absorbed by the doping material.

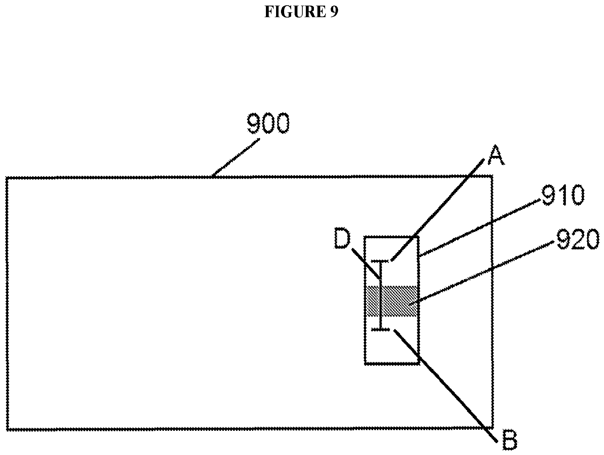

In connection with a process for authenticating an item such as a banknote including a substrate as described herein, the incident radiation may be transmitted through the substrate in a waveguide mode through a clear window of the item, e.g., a clear polymer window in some foreign currency. Alternatively, the incident radiation may be transmitted in a waveguide mode through a portion of the substrate having a metal foil or opacity layer on one or both of the upper and lower surfaces of the substrate. Figure 9 provides an example including a metal foil or opacity layer. Item 900 includes a clear window 910, in which clear window 910 is partially covered by foil 920. As shown in Figure 9, incident radiation at illumination point A is detected as output light at detection point B located laterally a distance D from illumination point A. Such illumination, transmission, and detection is possible even with foil 920 separating points A and B using the waveguide process described previously.

Upon detection, i.e., through decoupling from the substrate after waveguide transmission, the spectrum of radiation may be analyzed for patterns such as notches resulting from narrowband absorption by the doping material.

The process of authenticating an item such as a banknote including a substrate as described herein may be performed using apparatus capable of generating incident radiation for transmission through the substrate and detecting radiation transmitted through the substrate. Such authentication may be performed on high-speed transport mechanisms, such as those used to process currency at a rate of 40 banknotes per second.

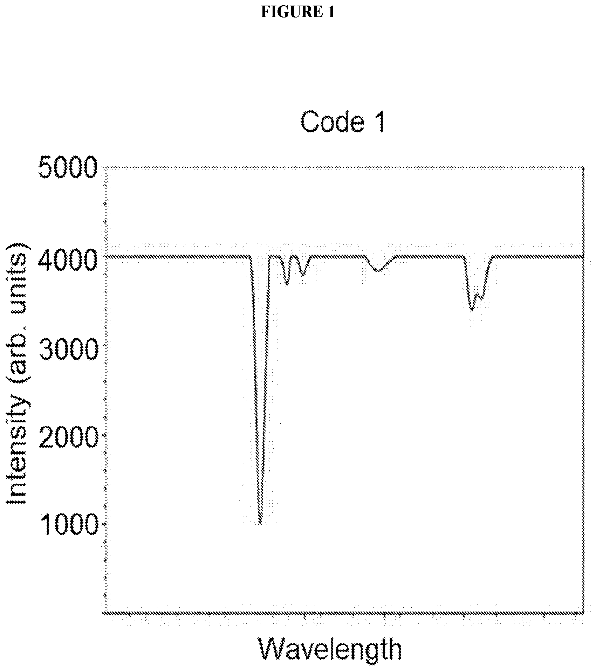

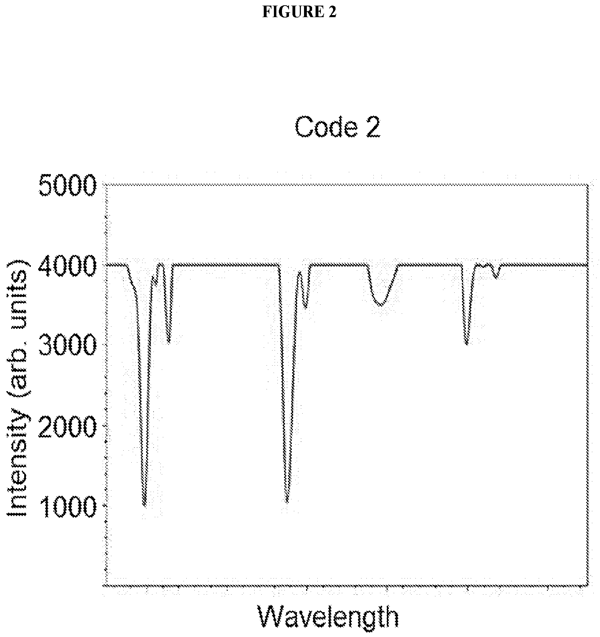

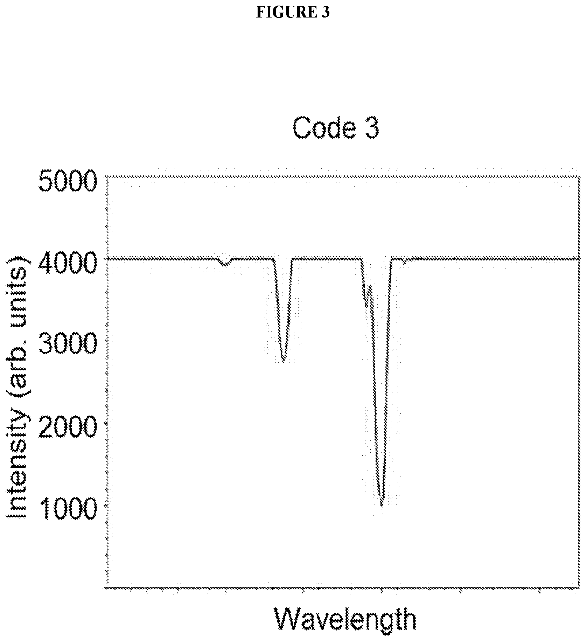

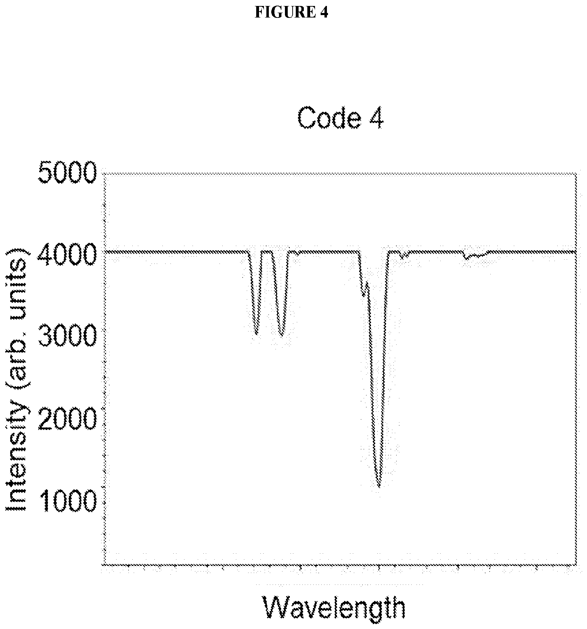

Figures 1-4 show spectra for a band of incident radiation in the near infrared portion of the electromagnetic spectrum transmitted through a clear approximately 75 micron polymer layer with varying types and levels of doping materials. The intensities of radiation detected after transmission of incident radiation through the polymer layer vary from the otherwise substantially uniform intensity of the incident radiation over the band of wavelengths due to the presence of doping materials. The doping materials are selected to absorb and/or scatter radiation at predetermined wavelengths to create the notched and otherwise non-uniform detected spectral patterns.

Experiments have demonstrated the use of up to ten unique codes embedded in a spectrum of radiation transmitted through a BOPP material that further maintains excellent clarity in regions of the BOPP material lacking an opacity layer and is indistinguishable from un-doped BOPP material. Using shape and Fano resonance effects, metallic and semiconductor nanostructure resonances of doping materials can be tuned and manipulated to create a large array of codes. These codes may be specific to certain institutions, such as Central Banks. The codes may also be used to authenticate banknotes and/or determine the denominations of banknotes on high speed sorting machines, such as those manufactured by Geiseke and Devrient, Cash Processing Solutions (CPS), and Toshiba.

Exemplary embodiments of the present invention are generally directed to devices, apparatus, systems, and methods for authentication using coded polymer substrates. Specifically, exemplary embodiments of the present invention use detecting/sensing mechanisms that may be used to authenticate items including a coded polymer substrate. Although the exemplary embodiments of the present invention are primarily described with respect to authentication and/or preventing counterfeiting, it is not limited thereto, and it should be noted that the exemplary coded polymer substrates may be used to encode other types of information for other applications. Further, the exemplary embodiments of the present invention may be used in conjunction with other authentication measures, e.g., holograms, watermarks, and magnetic encoding.

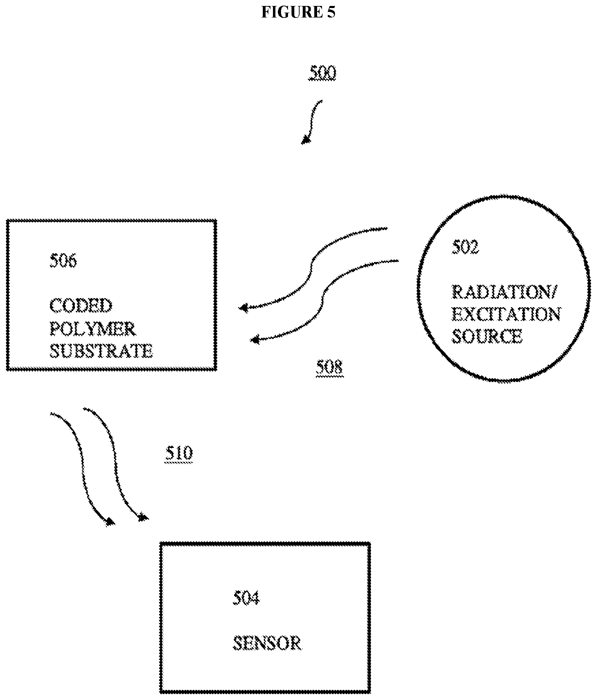

Figure 5 shows an exemplary system 500 in accordance with embodiments of the present invention. As shown in Figure 5, system 500 may include a radiation/excitation source 502, a sensor 504, and a coded polymer substrate 506. Radiation/excitation source 502 may be any source supplying radiation 508, such as, e.g., visible light, ultraviolet radiation, radio waves, or microwaves, which is to be transmitted through the coded polymer substrate. Radiation detected after transmission through the coded polymer substrate may include radiation 510 in the same wavelength range or radiation 510 in a different wavelength range.

Sensor 504 may include any detecting, sensing, imaging, or scanning device that is able to receive, image and/or measure the spectrum of the radiation emitted by the coded polymer substrate 504, such as a photometer or a digital camera.

According to certain exemplary embodiments of the present invention, radiation/excitation source 502 may include the flash of a digital camera, and sensor 504 may include the optical components and sensors of the digital camera. In one exemplary embodiment, the radiation/excitation source 502 may include the light source of a smartphone or tablet camera, e.g., Apple iPhone, Apple iPad, Samsung Galaxy or other Android devices, and sensor 504 may include the camera of the smartphone or tablet.

Coded polymer substrate 506 may be included in labels and may be attached or affixed to any product or item, e.g., tax stamps, apparel, currency, or footwear, for which authentication may be desirable.

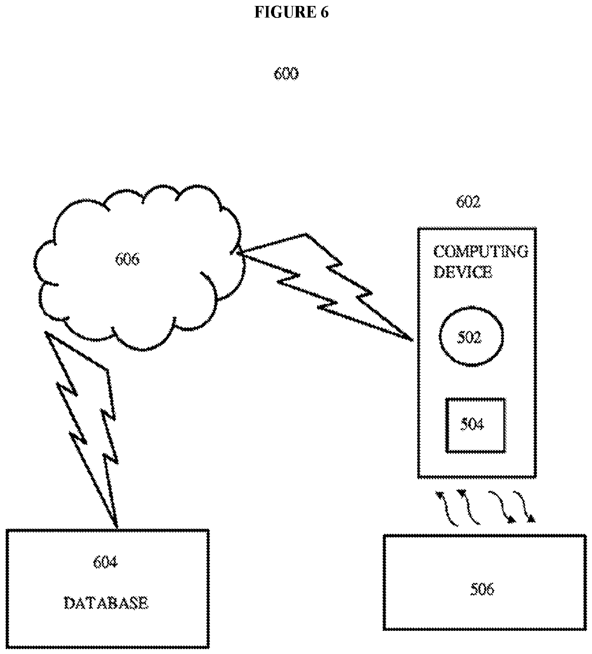

Figure 6 shows an exemplary system 600 that may be employed to authenticate an item using the coded polymer substrate described herein. For example, system 600 includes a computing device 602, which may include radiation/excitation source 502 and sensor 504. Computing device 602 may be any computing device that incorporates a radiation/excitation source 502 and sensor 504, such as a smartphone, a tablet, or a personal data assistant (PDA). Alternatively, radiation/excitation source 502 and sensor 504 may be stand-alone devices that operate independent of a computing device. As described herein, the radiation/excitation source 502 may irradiate a coded polymer substrate, and sensor 504 may measure the radiation emitted by the coded polymer substrate, including the spectral signature. The computing device 602 may then determine a code corresponding to the measured spectral signature of the radiation emitted by the coded polymer substrate. The processing of the measured spectral signature to determine the code may be performed by a remote computing device. Subsequently, the code or the measured spectral signature may be compared to a database of reference codes or spectral signatures. The database of reference codes may be stored locally on the scanning, imaging, or sensing device or remotely on a separate computing device.

As shown in Figure 6, to complete the authentication, the computing device 602 may compare the code or the measured spectral intensities to the reference codes or spectral signature stored in a database 604. Although Figure 6 illustrates this comparison being performed via a network 606 to a remote database 604, other embodiments contemplate database 604 being local to computing device 602.

Further, in some embodiments, the item being authenticated may include an identifying label, such as, e.g., a barcode, a QR code, or a magnetic code, to enable correlation of the code or the measured spectra to the item being authenticated. In a particular embodiment where computing device 602 is a smartphone or tablet, the transmission via the network 606 may be performed over a cellular data connection or a Wi-Fi connection. Alternatively, this can be performed with a wired connection or any other wired or wireless data transport mechanism.

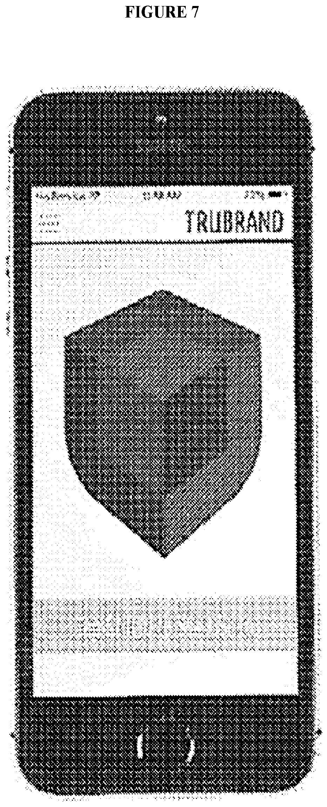

In certain embodiments of the present invention where a computing device, such as a smartphone or tablet, is utilized for authenticating an item, a software application may be used to simplify the authentication process. Figure 7 shows a smartphone with an exemplary screen shot of a software application that may be utilized for authenticating an item. The exemplary application may be configured to be executed on any mobile platform, such as Apple's iOS or Google's Android mobile operating system. When the application is run, the software application may provide instructions to a user on properly irradiating or exciting the coded polymer substrate and scanning or imaging the spectrum emitted from the coded polymer substrate. Once the irradiating and scanning of the polymer substrate is complete, the application may facilitate comparison of the measured spectral signature and/or the measured code with a database that stores certain reference codes or spectral signatures to authenticate the item. Further, the application may provide a message or other indicator informing the user of the result of the authentication. For example, the application may provide a text, graphical, or other visual indicator on the screen of the smartphone showing the results of the authentication. Alternatively, the application may provide audible and/or tactile indicators conveying the results of the authentication.

The embodiments and examples above are illustrative. The scope of the invention is defined by the appended claims. For a better understanding of the invention, its operating advantages and the specific objects attained by its uses, reference should be made to the accompanying drawings and descriptive matter in which there are illustrated exemplary embodiments of the invention.

## Claims

1. A method for authenticating an item, comprising:
providing the item including a polymer substrate (810) having a first surface (811) and a second surface (812), the polymer substrate (810) comprising a polymer material and a doping material (820), the polymer material and the doping material (820) configured to transmit radiation laterally through the polymer substrate (810) through a wave guided propagation mechanism between the first surface (811) and the second surface (812), and the doping material (820) capable of scattering radiation and absorbing radiation of at least one specific wavelength to generate a spectral signature in a spectral band of wavelengths of the transmitted radiation;
irradiating the item with incident radiation (831) through a clear polymer window of the item at a first point (A), **characterized by** a spectral band of wavelengths spanning a band of wavelengths including the at least one specific wavelength absorbed and scattered by the doping material (820); detecting at a second point (B) located laterally a distance (D) from the first point (A) the spectral signature after the radiation is transmitted laterally through the polymer substrate (810) through the wave guided propagation mechanism through total internal reflection between the first surface (811) and the second surface (812); and
determining a code associated with the spectral signature, and
comparing the determined code to a reference code.

2. The method of claim 1, wherein the doping material (820) is not matched to the index of refraction of the polymer material, and wherein the polymer substrate (810) is transparent and colorless.

3. The method of claim 1, wherein the doping material (820) is further capable of emitting radiation of a particular wavelength by excitation from the transmitted radiation.

4. The method of claim 1, further comprising providing an indication of authenticity if the determined code matches the reference code.

5. The method of claim 1, wherein the spectral signature is an absorption and scattering pattern in the spectral band of wavelengths of the incident radiation (831).

6. The method of claim 5, wherein the spectral band of wavelengths of the incident radiation (831) includes visible light.

7. The method of claim 5, wherein the spectral band of wavelengths of the incident radiation (831) includes non-visible electromagnetic radiation.

8. The method of claim 1, wherein the polymer material is biaxially oriented polypropylene.

9. The method of claim 1, wherein the doping material (820) is capable of absorbing and scattering radiation at a plurality of specific wavelengths to produce the spectral signature.

10. The method of claim 9, wherein the absorbed and scattered radiation at the plurality of specific wavelengths has different intensities at each of the plurality of specific wavelengths.

11. The method of claim 1, wherein the item is currency.

12. The method of claim 1, further comprising covering the polymer substrate (810) with an opacity layer.

13. The method of claim 1, wherein the doping material (820) is added to the polymer material at 0.01-10% loadings by weight.

14. A system (500; 600) for authenticating an item, comprising: the item including a polymer substrate (810) having a first surface (811) and a second surface (812), the polymer substrate (810) comprising a polymer material and a doping material (820), the polymer material and the doping material (820) configured to transmit radiation laterally through the polymer substrate (810) through a wave guided propagation mechanism between the first surface (811) and the second surface (812), and the doping material (820) capable of scattering radiation and absorbing radiation of at least one specific wavelength to generate a spectral signature in a spectral band of wavelengths of the transmitted radiation; a radiation source (502) for irradiating the item with incident radiation (831) through a clear polymer window of the item at a first point (A), **characterized by** a spectral band of wavelengths spanning a band of wavelengths including the at least one specific wavelength absorbed and scattered by the doping material (820); and a sensor (504) configured to detect at a second point (B) located laterally a distance (D) from the first point (A) the spectral signature after the radiation is transmitted laterally through the polymer substrate (810) through the wave guided propagation mechanism through total internal reflection between the first surface (811) and the second surface (812), and
further comprising a computing device (602) for determining a code associated with the spectral signature, wherein the computing device (602) is configured to compare the determined code to a reference code.

15. The system of claim 14, wherein the doping material (820) is not matched to the index of refraction of the polymer material, and wherein the polymer substrate (810) is transparent and colorless.

16. The system of claim 14, wherein the doping material (820) is further capable of emitting radiation of a particular wavelength by excitation from the transmitted radiation.

17. The system of claim 14, wherein the spectral signature is an absorption and scattering pattern in the spectral band of wavelengths of the incident radiation (831).

18. The system of claim 14, wherein the doping material (820) is capable of absorbing and scattering radiation at a plurality of specific wavelengths to generate the spectral signature, the absorbed and scattered radiation having different intensities at each of the plurality of specific wavelengths; and wherein the sensor (504) is configured to detect the intensities at each of the plurality of specific wavelengths in the spectral signature.

19. The system of claim 14, wherein the polymer material is biaxially oriented poly-propylene.

20. The system of claim 14, wherein the item is currency.

21. The system of claim 14, wherein the doping material (820) is added to the polymer material at 0.01-10% loadings by weight.

22. The system of claim 14, wherein the computing device (602) is configured to determine whether the item is authentic based on the comparison of the determined code to the reference code.

## Patentansprüche

1. Verfahren zum Authentifizieren eines Objekts, umfassend:
Bereitstellen des Objekts, das ein Polymersubstrat (810) mit einer ersten Oberfläche (811) und einer zweiten Oberfläche (812) umfasst, wobei das Polymersubstrat (810) ein Polymermaterial und ein Dotiermaterial (820) umfasst, das Polymermaterial und das Dotiermaterial (820) dafür ausgelegt sind, Strahlung seitlich durch das Polymersubstrat (810) durch einen wellengeführten Ausbreitungsmechanismus zwischen der ersten Oberfläche (811) und der zweiten Oberfläche (812) übertragen, und das Dotiermaterial (820) in der Lage ist, Strahlung zu streuen und Strahlung von mindestens einer spezifischen Wellenlänge zu absorbieren, um eine spektrale Signatur in einem Spektralband von Wellenlängen der übertragenen Strahlung zu erzeugen;
Bestrahlen des Objekts mit einfallender Strahlung (831) durch ein durchsichtiges Polymerfenster des Objekts an einem ersten Punkt (A), **dadurch gekennzeichnet, dass** ein spektrales Band von Wellenlängen ein Band von Wellenlängen überspannt, das die mindestens eine spezifische Wellenlänge einschließt, die durch das Dotiermaterial (820) absorbiert und gestreut wird;
Detektieren, an einem zweiten Punkt (B), der seitlich in einem Abstand (D) vom ersten Punkt (A) angeordnet ist, der spektralen Signatur nach der Übertragung der Strahlung seitlich durch das Polymersubstrat (810) durch den wellengeführten Ausbreitungsmechanismus durch Totalreflexion zwischen der ersten Oberfläche (811) und der zweiten Oberfläche (812); und
Bestimmen eines Codes, der mit der spektralen Signatur verknüpft ist, und
Vergleichen des bestimmten Codes mit einem Referenzcode.

2. Verfahren nach Anspruch 1, wobei das Dotiermaterial (820) nicht an den Brechungsindex des Polymermaterials angepasst ist und wobei das Polymersubstrat (810) transparent und farblos ist.

3. Verfahren nach Anspruch 1, wobei das Dotiermaterial (820) ferner in der Lage ist, durch Anregung durch die übertragene Strahlung Strahlung einer bestimmten Wellenlänge zu emittieren.

4. Verfahren nach Anspruch 1, das ferner umfasst, eine Angabe der Authentizität bereitzustellen, wenn der bestimmte Code mit dem Referenzcode übereinstimmt.

5. Verfahren nach Anspruch 1, wobei die spektrale Signatur ein Absorptions- und Streumuster im Spektralband der Wellenlängen der einfallenden Strahlung (831) ist.

6. Verfahren nach Anspruch 5, wobei das Spektralband der Wellenlängen der einfallenden Strahlung (831) sichtbares Licht umfasst.

7. Verfahren nach Anspruch 5, wobei das Spektralband der Wellenlängen der einfallenden Strahlung (831) nicht sichtbare elektromagnetische Strahlung umfasst.

8. Verfahren nach Anspruch 1, wobei das Polymermaterial biaxial orientiertes Polypropylen ist.

9. Verfahren nach Anspruch 1, wobei das Dotiermaterial (820) in der Lage ist, Strahlung bei mehreren spezifischen Wellenlängen zu absorbieren und zu streuen, um die spektrale Signatur zu erzeugen.

10. Verfahren nach Anspruch 9, wobei die absorbierte und gestreute Strahlung bei den mehreren spezifischen Wellenlängen unterschiedliche Intensitäten bei jeder der mehreren spezifischen Wellenlängen aufweist.

11. Verfahren nach Anspruch 1, wobei das Objekt ein Zahlungsmittel ist.

12. Verfahren nach Anspruch 1, das ferner das Abdecken des Polymersubstrats (810) mit einer Opazitätsschicht umfasst.

13. Verfahren nach Anspruch 1, wobei das Dotiermaterial (820) dem Polymermaterial in einer Menge von 0,01 bis 10% Beladungen nach Gewicht zugesetzt wird.

14. System (500; 600) zum Authentifizieren eines Objekts, umfassend: das Objekt weist ein Polymersubstrat (810) mit einer ersten Oberfläche (811) und einer zweiten Oberfläche (812) auf, wobei das Polymersubstrat (810) ein Polymermaterial und ein Dotiermaterial (820) umfasst, das Polymermaterial und das Dotiermaterial (820) dafür ausgelegt sind, Strahlung seitlich durch das Polymersubstrat (810) durch einen wellengeführten Ausbreitungsmechanismus zwischen der ersten Oberfläche (811) und der zweiten Oberfläche (812) zu übertragen, und das Dotiermaterial (820) in der Lage ist, Strahlung zu streuen und Strahlung von mindestens einer spezifischen Wellenlänge zu absorbieren, um eine spektrale Signatur in einem Spektralband von Wellenlängen der übertragenen Strahlung zu erzeugen; eine Strahlungsquelle (502) zum Bestrahlen des Objekts mit einfallender Strahlung (831) durch ein durchsichtiges Polymerfenster des Objekts an einem ersten Punkt (A), **dadurch gekennzeichnet, dass** ein spektrales Band von Wellenlängen ein Band von Wellenlängen überspannt, das die mindestens eine spezifische Wellenlänge einschließt, die durch das Dotiermaterial (820) absorbiert und gestreut wird; und einen Sensor (504), der dafür ausgelegt ist, an einem zweiten Punkt (B), der seitlich in einem Abstand (D) vom ersten Punkt (A) angeordnet ist, die spektrale Signatur nach der Übertragung der Strahlung seitlich durch das Polymersubstrat (810) durch den wellengeführten Ausbreitungsmechanismus durch Totalreflexion zwischen der ersten Oberfläche (811) und der zweiten Oberfläche (812) zu detektieren, und
ferner umfassend eine Rechenvorrichtung (602) zum Bestimmen eines Codes, der mit der spektralen Signatur verknüpft ist, wobei die Rechenvorrichtung (602) dafür ausgelegt ist, den bestimmten Code mit einem Referenzcode zu vergleichen.

15. System nach Anspruch 14, wobei das Dotiermaterial (820) nicht an den Brechungsindex des Polymermaterials angepasst ist und wobei das Polymersubstrat (810) transparent und farblos ist.

16. System nach Anspruch 14, wobei das Dotiermaterial (820) ferner in der Lage ist, durch Anregung durch die übertragene Strahlung Strahlung einer bestimmten Wellenlänge zu emittieren.

17. System nach Anspruch 14, wobei die spektrale Signatur ein Absorptions- und Streumuster im Spektralband der Wellenlängen der einfallenden Strahlung (831) ist.

18. System nach Anspruch 14, wobei das Dotiermaterial (820) in der Lage ist, Strahlung bei mehreren Wellenlängen zu absorbieren und zu streuen, um die spektrale Signatur zu erzeugen, wobei die absorbierte und gestreute Strahlung bei jeder der mehreren spezifischen Wellenlängen unterschiedliche Intensitäten aufweist; und wobei der Sensor (504) dafür ausgelegt ist, die Intensitäten bei jeder der mehreren spezifischen Wellenlängen in der spektralen Signatur erfassen.

19. System nach Anspruch 14, wobei das Polymermaterial biaxial orientiertes Polypropylen ist.

20. System nach Anspruch 14, wobei das Objekt ein Zahlungsmittel ist.

21. System nach Anspruch 14, wobei das Dotiermaterial (820) dem Polymermaterial in einer Menge von 0,01 bis 10% Beladungen nach Gewicht zugesetzt wird.

22. System nach Anspruch 14, wobei die Rechenvorrichtung (602) dafür ausgelegt ist zu bestimmen, ob der Artikel authentisch ist, basierend auf dem Vergleich des bestimmten Codes mit dem Referenzcode.

## Revendications

1. Procédé d'authentification d'un article, comprenant :
la fourniture de l'article comprenant un substrat polymère (810) ayant une première surface (811) et une seconde surface (812), le substrat polymère (810) comprenant un matériau polymère et un matériau dopant (820), le matériau polymère et le matériau dopant (820) étant configurés pour transmettre un rayonnement latéralement à travers le substrat polymère (810) par un mécanisme de propagation guidée par ondes entre la première surface (811) et la seconde surface (812), et le matériau dopant (820) étant capable de diffuser le rayonnement et d'absorber le rayonnement d'au moins une longueur d'onde spécifique pour générer une signature spectrale dans une bande spectrale de longueurs d'onde du rayonnement transmis ;
l'irradiation de l'article avec un rayonnement incident (831) à travers une fenêtre en polymère transparent de l'article en un premier point (A), **caractérisé par** une bande spectrale de longueurs d'onde couvrant une bande de longueurs d'onde comprenant au moins une longueur d'onde spécifique absorbée et diffusée par le matériau dopant (820) ; la détection en un deuxième point (B) situé latéralement à une distance (D) du premier point (A) de la signature spectrale après que le rayonnement a été transmis latéralement à travers le substrat polymère (810) par le mécanisme de propagation guidée par ondes par réflexion interne totale entre la première surface (811) et la deuxième surface (812) ; et
la détermination d'un code associé à la signature spectrale, et
la comparaison du code déterminé à un code de référence.

2. Procédé selon la revendication 1, le matériau dopant (820) n'étant pas adapté à l'indice de réfraction du matériau polymère, et le substrat polymère (810) étant transparent et incolore.

3. Procédé selon la revendication 1, le matériau dopant (820) étant en outre capable d'émettre un rayonnement d'une longueur d'onde particulière par excitation à partir du rayonnement transmis.

4. Procédé selon la revendication 1, comprenant en outre la fourniture d'une indication d'authenticité si le code déterminé correspond au code de référence.

5. Procédé selon la revendication 1, la signature spectrale étant un motif d'absorption et de diffusion dans la bande spectrale de longueurs d'onde du rayonnement incident (831).

6. Procédé selon la revendication 5, la bande spectrale de longueurs d'onde du rayonnement incident (831) comprenant la lumière visible.

7. Procédé selon la revendication 5, la bande spectrale de longueurs d'onde du rayonnement incident (831) comprenant un rayonnement électromagnétique non visible.

8. Procédé selon la revendication 1, le matériau polymère étant du polypropylène orienté biaxialement.

9. Procédé selon la revendication 1, le matériau dopant (820) étant capable d'absorber et de diffuser le rayonnement à une pluralité de longueurs d'onde spécifiques pour produire la signature spectrale.

10. Procédé selon la revendication 9, le rayonnement absorbé et diffusé à la pluralité de longueurs d'onde spécifiques ayant des intensités différentes à chacune de la pluralité de longueurs d'onde spécifiques.

11. Procédé selon la revendication 1, l'article étant de la monnaie.

12. Procédé selon la revendication 1, comprenant en outre le recouvrement du substrat polymère (810) par une couche d'opacité.

13. Procédé selon la revendication 1, le matériau dopant (820) étant ajouté au matériau polymère à des charges de 0,01 à 10 % en poids.

14. Système (500 ; 600) d'authentification d'un article, comprenant : l'article comprenant un substrat polymère (810) ayant une première surface (811) et une seconde surface (812), le substrat polymère (810) comprenant un matériau polymère et un matériau dopant (820), le matériau polymère et le matériau dopant (820) étant configurés pour transmettre un rayonnement latéralement à travers le substrat polymère (810) par un mécanisme de propagation guidée par ondes entre la première surface (811) et la seconde surface (812), et le matériau dopant (820) étant capable de diffuser le rayonnement et d'absorber le rayonnement d'au moins une longueur d'onde spécifique pour générer une signature spectrale dans une bande spectrale de longueurs d'onde du rayonnement transmis ; une source de rayonnement (502) pour irradier l'article avec un rayonnement incident (831) à travers une fenêtre en polymère transparent de l'article à un premier point (A), **caractérisé par** une bande spectrale de longueurs d'onde couvrant une bande de longueurs d'onde comprenant l'au moins une longueur d'onde spécifique absorbée et diffusée par le matériau dopant (820) ; et un capteur (504) configuré pour détecter en un second point (B) situé latéralement à une distance (D) du premier point (A) la signature spectrale après que le rayonnement a été transmis latéralement à travers le substrat polymère (810) par le mécanisme de propagation guidée par ondes par réflexion interne totale entre la première surface (811) et la seconde surface (812), et comprenant en outre un dispositif informatique (602) pour déterminer un code associé à la signature spectrale, le dispositif informatique (602) étant configuré pour comparer le code déterminé à un code de référence.

15. Système selon la revendication 14, le matériau dopant (820) n'étant pas adapté à l'indice de réfraction du matériau polymère, et le substrat polymère (810) étant transparent et incolore.

16. Système selon la revendication 14, le matériau dopant (820) étant en outre capable d'émettre un rayonnement d'une longueur d'onde particulière par excitation du rayonnement transmis.

17. Système selon la revendication 14, la signature spectrale étant un motif d'absorption et de diffusion dans la bande spectrale de longueurs d'onde du rayonnement incident (831).

18. Système selon la revendication 14, le matériau dopant (820) étant capable d'absorber et de diffuser le rayonnement à une pluralité de longueurs d'onde spécifiques pour générer la signature spectrale, le rayonnement absorbé et diffusé ayant des intensités différentes à chacune de la pluralité de longueurs d'onde spécifiques ; et le capteur (504) étant configuré pour détecter les intensités à chacune de la pluralité de longueurs d'onde spécifiques dans la signature spectrale.

19. Système selon la revendication 14, le matériau polymère étant du polypropylène orienté biaxialement.

20. Système selon la revendication 14, l'article étant de la monnaie.

21. Système selon la revendication 14, le matériau dopant (820) étant ajouté au matériau polymère à des charges de 0,01 à 10 % en poids.

22. Système selon la revendication 14, le dispositif informatique (602) étant configuré pour déterminer si l'article est authentique sur la base de la comparaison du code déterminé au code de référence.
